# EUROPEAN PATENT APPLICATION

(11) **EP 2 400 691 A1**
(43) Date of publication of application: **28.12.2011**
(21) Application number: 11164496.9
(22) Date of filing: 02.05.2011
(51) Int. Cl.: H04L 12/14

(54) **Mechanism to prevent overcharging/undercharging**

(30) Priority: 22.06.2010 IN CH17472010
(71) Applicant: Alcatel Lucent, 75007 Paris (FR)
(72) Inventor: Kumar, Ramadoss, 600032 Chennai (IN); Swaminathan, Seetharaman, 600032 Chennai (IN)
(74) Representative: Chaffraix, Sylvain

(57) **Abstract**

A mechanism to prevent overcharging or undercharging in communication networks is disclosed. The present invention relates to communication networks and, more particularly, to charging in communication networks. In case of communication networks when there is a failure in the network and the session is released, the charging modules are not immediately informed about the session release. Thus, it results in overcharging or undercharging. The method discloses a mechanism wherein on release of the session, the softswitch sends accurate intimation to the charging module even under different communication network/node failure conditions. The intimation may be in the form of the time stamp that gives an indication of the time of release of the session. The charging module on receiving the indication stops charging for the session and prevents overcharging or undercharging.

## Description

The present invention relates to communication networks and, more particularly, to charging in communication networks.

Media Gateway Controllers (MGCs) are employed in geo redundancy environments in order to handle traffic conditions and overloads in the communication network. In a Geo Redundancy (GR) environment, MGC function redundancy concept is employed, where a pair of MGCs is in active-active condition. Each MGC controls a part of the entire network. In case of failure of a MGC, the remaining MGC takes over the control of the entire network. In such scenarios, there is every possibility that the end user is subjected to overcharging or undercharging due to failure of the MGC as the charging modules may not be intimated properly of the session duration. In scenarios involving inter-domain/inter-network sessions, where aspects such as division of revenue are involved, it becomes exceedingly important to ensure that the charging modules receive accurate information about the session duration.

In Session Initiation Protocol (SIP) networks, if the SIP signaling towards remote side alone fails, new calls from/to remote side shall be switched to the other MGC. However, for active calls, release from/to remote side shall not reach the MGC on the other side, due to which charging shall be still active on the other node. As Megaco/MGCP signaling towards the Media Gateway (MG) is still active, release via Megaco/MGCP signaling is also not possible in this case. One possible solution to this problem is to employ session refresh timer. But the time configured for the session refresh timer is quite high, due to which overcharging/undercharging shall be effective for sometime even if failure occurs. Even if there is a heartbeat mechanism between the two MGCs, it would involve additional network traffic, and the failure detection would anyway take considerable amount of time. This, in turn, would result in considerable amount of overcharging /undercharging even if the two MGCs in GR synchronize data for stable calls.

If the SIP signaling towards the remote side fails and the Megaco signaling has also failed (or the MG has failed), on detection of the failure, the session can be released and the charging functions may be informed regarding the failure. However, the exact time of failure is not available and only an approximate time will be indicated to the charging module. Due to this there is possibility of considerable amount of charging or overcharging to persist as there may be time delay in triggering the release of the session and intimating the charging module.

In cases where Real Time Protocol (RTP) alone fails and the MGCP signaling is still active, there is no other option than to release the session and stop charging once the MG informs the RTP failure. The time needed for informing the RTP would still lead to overcharging or undercharging.

If one of the MGC fails, the other MGC called as mate MGC takes over the functioning. However, even in such a case, it will take considerable time for the mate MGC to detect failure of its mate. Further, release may take considerable time to be processed, leading to overcharging/undercharging. If the Megaco/MGCP signaling towards the MG alone fails, any trigger to release the session from the MG would not reach the MGC, and this could result in overcharging/undercharging.

In cases where the MG goes down, the H.248 heartbeat mechanism detects the failure. The timestamp of the failure detection can be used as the time of release. However, this again would only be a very crude approximation. The problem will be more acute if the MG has gone down on one side, and there is a Megaco/MGCP signaling failure on the other side. Due to the above discussed problems, overcharging/ undercharging still persists.

In view of the foregoing, an embodiment herein provides a network controller for handling charging in a geo redundancy environment in a communication network. The controller is adapted for receiving an indication message from a media gateway on detecting a session release during one or more failures in the communication network, fetching information from the message on time of release and sending an indication to a charging module to stop charging for an on going session for which the release occurred. The network controller is adapted for receiving the indication message in the form of a service change request. The network controller is further adapted to update the release information to a database. The network controller is adapted to receive the time of release in a session initiation protocol BYE message. The network controller is further adapted to send intimation to a remote side of the release in a session initiation protocol BYE message. The network controller may be a softswitch or media gateway controller. The network controller is functioning in a non geo-redundancy environment during one or more failures. The network controller is further adapted to store session set up information in a database. The network controller is further adapted to synchronize the stored information on the database with a mate media gateway controller.

Embodiments further disclose a method for preventing undercharging and overcharging in a geo redundancy environment in a communication network. The method comprising a media gateway sending an indication to a network controller on release of a session under communication network/node failure scenarios, the network controller extracting time related information from the message received from the media gateway, the network controller sending an indication to a charging module of the release and the network controller informing the time of the session release to the remote side in a session initiation protocol BYE message. The method wherein the network controller extracts time related information of the release of a session from the session initiation protocol BYE message in case the session release was triggered from the remote side. The media gateway sends an indication in the form of a service change request. The time related information indicates the time of release of the session. The indication sent by the network controller is to stop charging for the session. The network controller converts the time related information into a suitable GMT. The network controller is functioning in a non geo-redundancy environment during the one or more failures. The network controller is further adapted to store session set up information in a database. The network controller is further adapted to synchronize the stored information on the database with a mate media gateway controller. The failure is due to failure of session initiation protocol signaling. The failure is due to failure of session initiation protocol and media gateway control protocol/ /H.248 protocol. The failure is due to failure of a network controller. The failure is due to failure of media gateway control protocol/H.248 protocol. The failure is due to failure of a media gateway. The failure is due to a combination of session initiation protocol signaling, media gateway control protocol, H.248 protocol, media gateway and network controller.

The network controller is further adapted for updating a database of the failure. The network may be a session initiation protocol network, an IP multimedia subsystem network (IMS) or a next generation network (NGN). The network controller may be a softswitch or a media gateway controller.

These and other aspects of the embodiments herein will be better appreciated and understood when considered in conjunction with the following description and the accompanying drawings.

The embodiments herein will be better understood from the following detailed description with reference to the drawings, in which:
FIG. 1 illustrates architecture of the network, according to an embodiment as disclosed herein;
FIG. 2a and 2b are sequence diagrams depicting a scenario where SIP signaling towards the remote side alone fails and remote side triggers the release, according to an embodiment as disclosed herein;
FIG. 3a, 3b and 3c are sequence diagrams depicting a scenario where SIP signaling towards the remote side alone fails and own side triggers the release, according to an embodiment as disclosed herein;
FIG. 4a and 4b are sequence diagrams depicting a scenario where SIP signaling alone fails and remote side triggers the release, without a central database provided, according to an embodiment as disclosed herein.
FIG. 5a, 5b and 5c are sequence diagrams depicting a scenario where SIP signaling alone fails and own side triggers the release, without a central database provided, according to an embodiment as disclosed herein;
FIG 6a and 6b are sequence diagrams depicting a scenario wherein SIP signaling and MGCP fails and the remote side triggers the release, according to an embodiment as disclosed herein;
FIG 7a and 7b are sequence diagrams depicting a scenario wherein SIP signaling and MGCP fails and the remote side triggers the release, without a central database provided, according to an embodiment as disclosed herein;
FIG. 8 is a sequence diagram depicting a scenario wherein SIP signaling and MGCP fails and the own side triggers the release, according to an embodiment as disclosed herein;
FIG 9 is a sequence diagram depicting a scenario wherein SIP signaling and MGCP fails and the own side triggers the release, without a central database provided, according to an embodiment as disclosed herein;
FIG. 10 is a flow chart depicting a scenario where the RTP alone fails and MG triggers the release, according to an embodiment as disclosed herein;
FIG. 11 is a sequence diagram depicting a scenario where one of the softswitches goes down and the release is triggered by the remote side, according to an embodiment as disclosed herein;
FIG. 12 is a sequence diagram depicting a scenario where one of the softswitches goes down and the release is triggered by the remote side without a central database provided, according to an embodiment as disclosed herein;
FIG. 13 is a sequence diagram depicting a scenario where one of the softswitches goes down and the release is triggered by the own side, according to an embodiment as disclosed herein;
FIG. 14 is a sequence diagram depicting a scenario where there is temporary failure of H.248/MGCP, according to an embodiment as disclosed herein; and
FIG. 15 is a sequence diagram depicting a scenario where the gateway goes down resulting in permanent failure, according to an embodiment as disclosed herein.

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

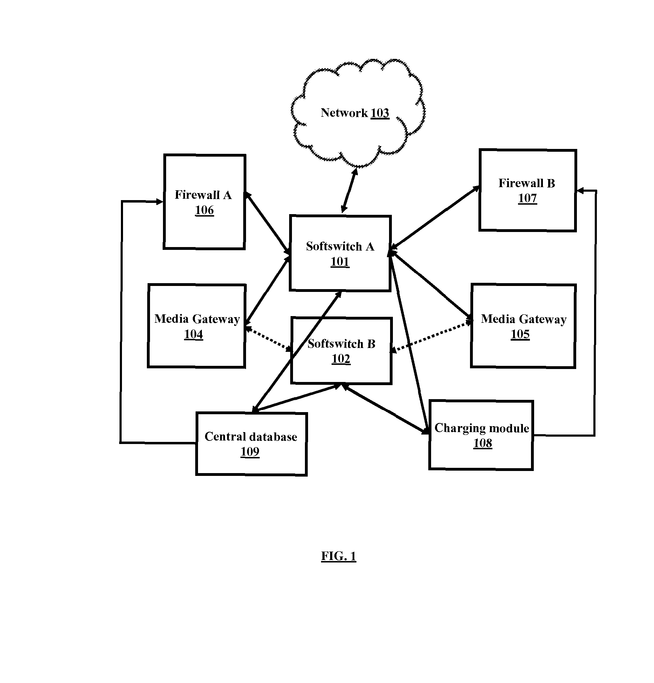

The embodiments herein disclose a mechanism for preventing overcharging or undercharging for sessions by providing systems and methods thereof. Referring now to the drawings, and more particularly to FIGS. 1 through 15, where similar reference characters denote corresponding features consistently throughout the figures, there are shown embodiments.

A mechanism for preventing overcharging or undercharging in communication networks is disclosed. The method relates to functioning of softswitches in geo redundancy environments. The method employs a mechanism wherein on failure of one softswitch among a pair of softswitches, the time of actual release of the session may be transported over the SIP in the BYE message. The charging module may be informed regarding the time of release of the session. Further, the charging module may extract the accurate time of release of the session from the time stamp and may charge for the session accordingly. This ensures that the session is charged correctly and only for the time period for which the session was active. The failure may be due to several reasons such as signaling failure, network connectivity failure and so on. On occurrence of failure, the softswitch or the media gateway may send a service change request for service from another softswitch. Further, the time of release of the session may also be recorded which may be indicated to the charging function in the form of time stamp parameter in the termination message. In addition, the receiving softswitch may then calculate the time of release with reference to its own time zone.

FIG. 1 illustrates the architecture of the network, according to an embodiment as disclosed herein. The network described in the embodiments herein is a SIP network employed for illustrative purposes only and does not aim to limit the scope of the application to SIP networks. The method may be implemented for IP multimedia sub system (IMS) networks or any other Next Generation Network (NGN). In case of IMS networks, the softswitch may be replaced by an Interconnect Border Control Function (IBCF) and the MG may be replaced by a Border Gateway (BG). In non-IMS networks, the network elements comprise the Public Switched Telephone Network (PSTN) gateway and Public Land Mobile Network (PLMN) gateway. The softswitch referred to in the following embodiments may be a Media Gateway Controller (MGC) that is capable of performing the same function as that of the softswitch when replaced by the same.

Softswitch A 101 and softswitch B 102 are functioning in a geo redundancy environment in active-active mode. Each softswitch controls a part of the entire network 103. Softswitch A 101 acts as a mate to softswitch B 102 and vice versa. In case of a failure of one of the softswitches 101, 102, the remaining softswitch 101, 102 takes over the control of the entire network 103. The pair forms the softswitch cluster of the network 103. The active-active softswitch 101, 102 redundancy concept is based on a static allocation of MGs to the two softswitches 101, 102 of a pair. Each MG 104, 105 may have a primary link connected to one softswitch, say softswitch A 101 and a secondary link to the other softswitch, say softswitch B 102. In case of a failure of the softswitch A 101, which controls the primary link, the control is switched over to the secondary link and its controlling softswitch B 102. The connection between softswitch A 101 and softswitch B 102 is monitored via SIP Heartbeat (i.e., a periodic health-check and status monitoring mechanism). When there is a failure in the SIP signalling or some network problem, the connectivity of the network 103 may be lost. In such scenarios, on failure of one softswitch A 101, another softswitch B 102 which the geographically redundant mate of softswitch A 101 may provide the service provided earlier by softswitch A. The time of release of the session may be sent in a termination message to the charging function. Hence, the charging function may charge for the session according to the time the session was active. Thus, preventing overcharging or undercharging scenarios.

In an embodiment, both the softswitch A 101 and softswitch B 102 may have synchronized their charging related information to a central database or may have synchronized with each other for stable call related information.

The network 103 may be a SIP network, an IMS network or any other NGN network. In case, of networks other than SIP, the network 103 elements softswitch 101, 102 and MG 104, 105 may be replaced by their corresponding elements accordingly.

The MGs 104, 105 act as translation device or service that converts digital media streams between disparate telecommunications networks such as PSTN, SS7, Next Generation Networks. MGs 104, 105 enable multimedia communications across different networks. Because the MG 104, 105 connects different types of networks 103, one of its main functions is to convert between different transmission and coding techniques. MGs 104, 105 are often controlled by a softswitch 101, 102, which provides the call control and signaling functionality. Communication between MGs 104, 105 and Call Agents (which are part of the softswitch 101, 102) is achieved by means of protocols such as MGCP or Megaco (H.248). The media gateway 104, 105 may also trigger the release of the session on failure of the network 103.

Firewall A 106 and firewall B 107 act as intermediate network elements. Firewall A 106 allows all authorized interactions of the network 103 elements with the softswitch A 101. Firewall B 107 allows all authorized interactions of the network elements with softswitch B 102. The firewall 106, 107 acts as a circuit level gateway and applies security mechanisms when a Transmission Control Protocol (TCP) or User Datagram Protocol (UDP) connection is established. Once the connection has been made, packets can flow between the soft switches 101, 102 and the remote side without further checking.

The charging module 108 is responsible for handling charging related operations for sessions. On release of an ongoing session, the softswitch 101, 102 informs the charging module 108 to stop charging for the session. On receiving an indication the charging module 108 stops charging for the sessions. The charging may be either an online charging or off line charging process. The release time to be used by the charging functions may be passed using existing protocol messages between the softswitch and the charging functions. For example, in case of an offline charging architecture wherein the CDF (as defined in 3GPP TS 32.260) takes care of the charging aspects, it may be passed in the time-stamps AVP in the ACR message sent over the Diameter interface from the softswitch towards the CDF. Similarly, in case of online charging wherein the OCS takes care of charging aspects, the information may be passed in appropriate CCR messages towards the OCS. The charging module may also have some redundancy mechanisms. However, though this aspect is not discussed explicitly here, the overall principles and approach discussed here will still be applicable even in the presence of any redundancy schemes that may be employed for the charging module.

The central database 109 is employed for maintaining updates regarding a session. Session details such as time of set up, time of release and the like may be stored in the central database 109. On occurrence of a failure, or when a session is released the softswitch makes an update in the central database 109 before sending an indication to the charging module 108 to stop charging for the session. The central database may also have some redundancy mechanisms. However, though this aspect is not discussed explicitly here, the overall principles and approach discussed here will still be applicable even in the presence of any redundancy schemes that may be employed for the central database.

In an embodiment, in the proposed method the time stamp of the actual release may be inserted over the SIP in a termination message such as a BYE message. The time stamp in the BYE message may be conveyed by means of the date header in GMT format. Further, on receiving the message, the softswitch 101, 102 calculates the time with reference to its own time zone. In addition, it may also be possible to employ a different mechanism to convey the release time stamp in the termination message such as employing a different header or the like.

The embodiments herein relate to the syntax followed for sending the time stamp parameter in the service change request sent from the MG towards the softswitch. The timestamp of the actual release may be transported over the H.248 interface from the Media Gateway (MG) towards the softswitch after H.248 failure (due to IP network failure or otherwise), etc. Also, in cases where the gateway goes down or other long-term failure scenarios may result, the failure timestamp is transported to the softswitch which could then be used to inform the charging function accordingly regarding the session duration that has to be charged. The basic syntax during failure conditions is given below. The syntax indicates that the time stamp in the failure message that was sent as optional earlier must be sent mandatorily during failure scenarios so as to ensure charging is appropriate for the session.

```
       TimeNotation ::= SEQUENCE
       {date IA5String(SIZE(8)), -- yyyymmdd format time
       IA5String(SIZE(8)) -- hhmmssss format
       per ISO 8601:1988}
       ServiceChangeParm ::= SEQUENCE
       {
       serviceChangeMethod ServiceChangeMethod,
       serviceChangeAddress ServiceChangeAddress OPTIONAL,
       serviceChangeVersion INTEGER(0..99) OPTIONAL,
       serviceChangeProfile ServiceChangeProfile OPTIONAL,
       serviceChangeReason Value,
       A serviceChangeReason consists of a numeric reason code
       and an optional text description.
       The serviceChangeReason SHALL be a string consisting of
       a decimal reason code, optionally followed by a single
       space character and a textual description string.
       This string is first BER-encoded as an IA5String.
       The result of this BER-encoding is then encoded as
       an ASN.1 OCTET STRING type, "double wrapping" the
       value as was done for package elements.
       serviceChangeDelay INTEGER(0..4294967295) OPTIONAL,
       32-bit unsigned integer
       serviceChangeMgcld Mld OPTIONAL,
       timeStamp TimeNotation OPTIONAL,
       nonStandardData NonStandardData OPTIONAL,
       ... }
```

The inclusion of the time stamp parameter in the service change request notifies the softswitch 101, 102 of the time when the session was released and the charging module 108 is then intimated accordingly. As mentioned above, inclusion of the time stamp under such failure conditions ensures that the charging is appropriate for the session.

The embodiments below indicate the time stamp parameter sent in the notification request.

```
       NotifyRequest ::= SEQUENCE
       {
       terminationID TerminationIDList,
       observedEventsDescriptor ObservedEventsDescriptor,
       errorDescriptor ErrorDescriptor OPTIONAL,
       ...}
       ObservedEventsDescriptor ::= SEQUENCE
       {
       requestld RequestID,
       observedEventLst SEQUENCE OF ObservedEvent
       }
       ObservedEvent ::= SEQUENCE
       {
       eventName EventName,
       streamID StreamID OPTIONAL,
       eventParList SEQUENCE OF EventParameter,
       timeNotation TimeNotation OPTIONAL,
       ...}
```

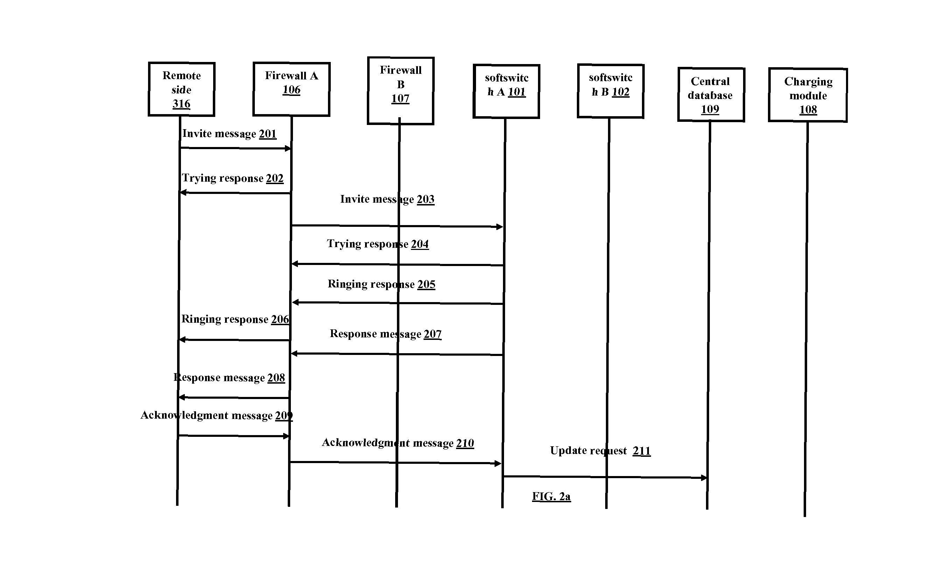

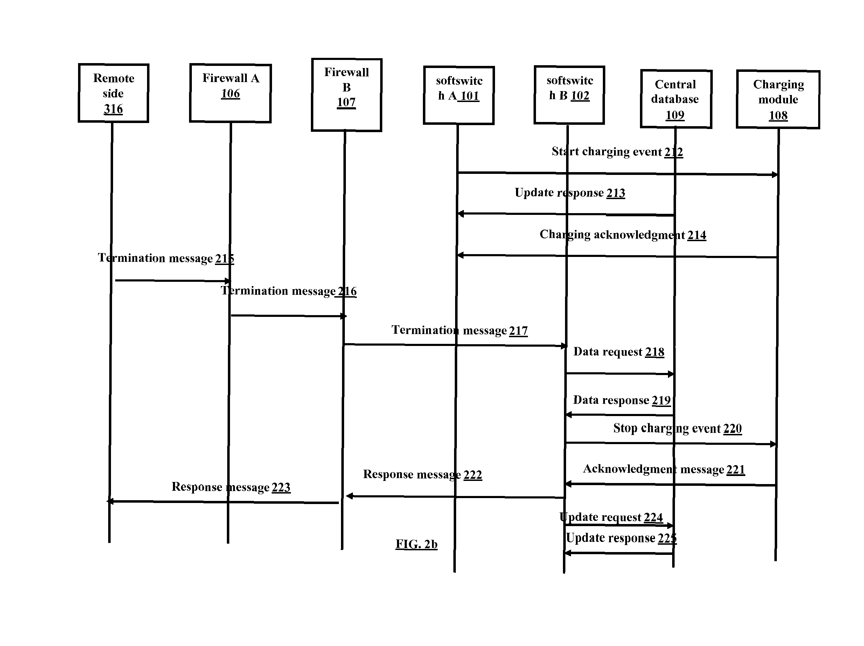

FIG. 2a and 2b are sequence diagrams depicting a scenario where SIP signaling towards the remote side alone fails and remote side triggers the release, according to an embodiment as disclosed herein. Consider that a normal session is established and further the remote side 316 may trigger a release. The softswitch referred to in the following embodiment may be a MGC or an IMS S-CSCF. When the session is setup, an invite message may be sent (201) to the firewall A 106. The message may be sent in the form of INVITE or the like. The firewall A 106 sends (202) an indication that the message is being conveyed and being processed. Further, firewall A 106 sends (203) the invite message to softswitch A 101. Softswitch A 101 sends (204) a response message that the message is being conveyed and being processed. The response message may be a standard 100 Trying response or the like. A ringing response is sent (205) to firewall A 106 by Softswitch A 101 once the called user is alerted. The ringing response is then sent (206) to the remote side 316. The Softswitch A 101 may then send (207) a final response message to the firewall A 106 once the called user answers the session request. The response message may be a 200 OK response message and the like. The response may be sent (208) to the remote side 316 by firewall A 106. The remote side 316 acknowledges (209) the firewall A 106. The acknowledgment message may then be sent (210) to softswitch A 101. Further, an update request may be sent to the central database 109. The message may be a diameter protocol message or sent over SIP protocol or any other proprietary protocol interface. In an embodiment, instead of updating the central database 109 the two softswitches 101, 102 may synchronize stable session data with each other. The softswitch A 101 sends (211) update request message to the central database 109. A message is sent (212) to the charging module 108 to start the charging for the session. The charging interface is a generic charging interface and appropriate information may be required to be passed in case of online charging or offline charging. Also, depending on the interface an acknowledgment may be sent from the charging module 108 towards the softswitch A 101. The central database 109 then sends (213) an update response message to the softswitch A 101. The charging module 108 may then send (214) an acknowledgment to the softswitch A 101 indicating that charging process is started for the session. Subsequently, during the active phase of the session, the signaling between the softswitch A 101 and remote side 316 fails. In addition, the signaling between softswitch A 101 and softswitch B 102 may also have failed (due to IP connectivity failure perhaps). The remote side 316 may subsequently trigger the release of the session, for instance when the remote user on-hooks. The remote side 316 may send (215) a terminate message to firewall A 106. The time stamp information may be sent in the termination message in the Date header. After attempting to reach softswitch A 101, the firewall A 106 switches release request to softswitch B 102 via Firewall B 107. So firewall A 106 sends (216) termination message to the firewall B 107. Firewall B 107 sends (217) the termination message to the softswitch B 102. Since softswitch B 102 does not have session details it requests the information from the central database 109. So, softswitch B 102 sends (218) a data request to the central database 109. The central database 109 sends data response (219) to the softswitch B 102. The softswitch B 102 sends (220) a message to the charging module 109 to stop the charging event. The message may also include details such as call details from the central database 109, time stamp information from the termination message to calculate session time and the time of release. The charging module 108 may then send (221) a message to the softswitch B 102 indicating that the charging is stopped. Softswitch B 102 then sends (222) the response message (to the termination message) to the firewall B 107 which then sends (223) it to the remote side 316. Further, central database 109 may be updated accordingly. The softswitch B 102 may send (224) an update request message to the central database 109. The central database 109 may send (225) a response message to the softswitch B 102 after performing the necessary updates. The call flows in the above embodiment indicate the call flows for only the relevant network elements and not end-to-end call flows; however it does not aim to limit the scope of the application in any manner. The various actions in method 200 may be performed in the order presented, in a different order or simultaneously. Further, in some embodiments, some actions listed in FIG. 2 may be omitted.

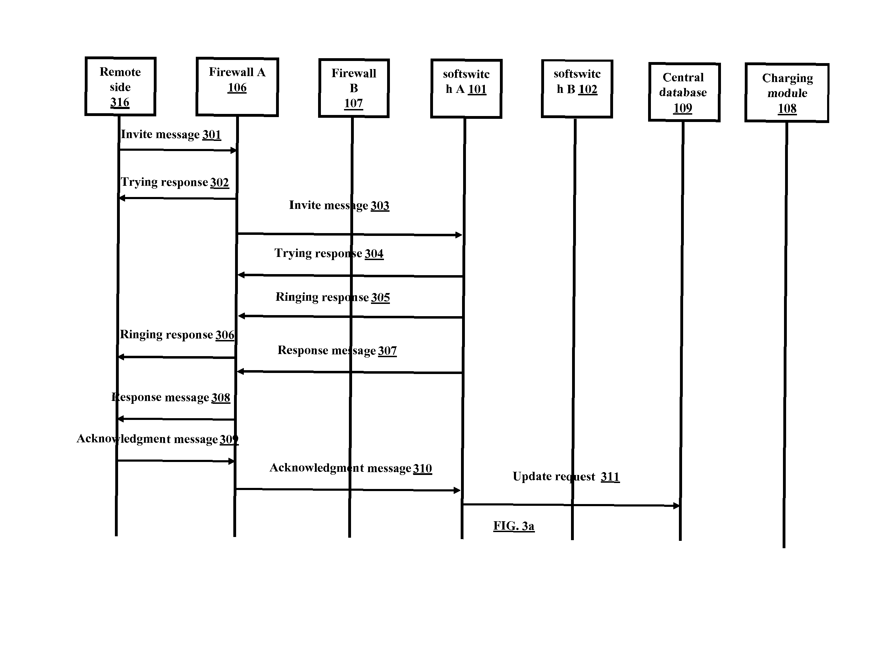

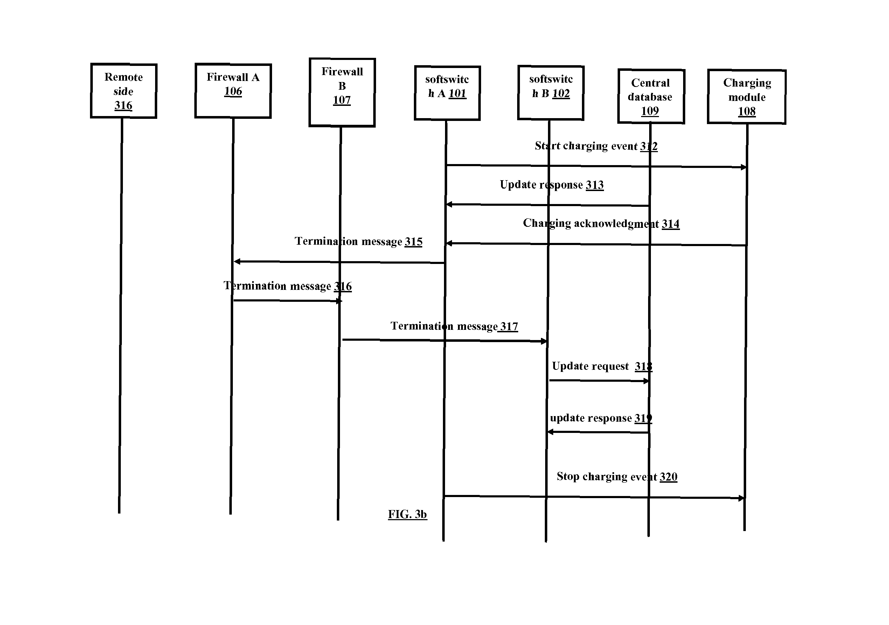

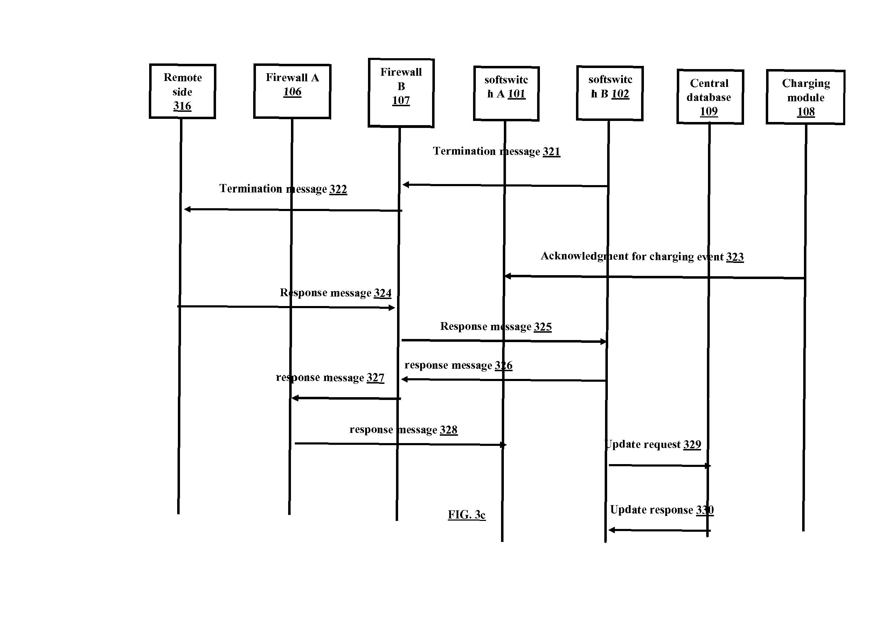

FIG. 3a, 3b and 3c are sequence diagrams depicting a scenario where SIP signaling towards the remote side alone fails and own side triggers the release, according to an embodiment as disclosed herein. Consider that a normal session is established and further the own side (i.e., softswitch A 101 side) may trigger a release. The softswitch referred to in the following embodiment may be a MGC or an IMS S-CSCF. For setting up the session an invite message may be sent (301) to the firewall A 106. The message may be sent in the form of INVITE or the like. The firewall A 106 sends (302) an indication that the message is being conveyed and is being processed. Further, firewall A 106 sends (303) the invite message to softswitch A 101. Softswitch A 101 sends (304) a response that the message is being conveyed and is being processed. The response message may be a standard 100 Trying response or the like. A ringing response is sent (305) to firewall A 106 by Softswitch A 101 after the called user is alerted. The ringing response is then sent (306) to the remote side 316. The Softswitch A 101 may then send (307) a final response message to the firewall A 106 once the called user answers the session request. The response message may be a 200 OK response message and the like. The response may be sent (308) to the remote side 316. Remote side 316 acknowledges (309) the firewall A 106. The acknowledgment message may then be sent (310) to softswitch A 101. Further, an update request may be sent to the central database 109. The message may be sent as a DIAMETER protocol message or over SIP protocol or any other proprietary protocol interface. In an embodiment, instead of updating the central database 109 the two softswitches 101, 102 may synchronize stable session data with each other. The softswitch A 101 sends (311) update request message to the central database 109. Further, the charging module 109 has to be intimated regarding the charging process. Softswitch A 101 may then send (312) a message to the charging module 108 in order to start the charging for the session. The central database 109 may send (313) update response message to softswitch A 101. The charging module 108 may send (314) an acknowledgment message to the softswitch A 101 for the charging event. Subsequently, consider that the SIP signaling between the softswitch A 101 and the remote side 316 fails. Subsequent to the SIP signaling failure (immediately or much later), release may be triggered from the softswitch A 101, for example due to the called user initiating the release of the session. After trying to reach the remote side 316, the softswitch A 101 sends termination message towards softswitch B 102 (via firewall A 106 and firewall B 107) to try and reach the remote side 316. Further, the time stamp information is sent in the BYE message. The time stamp information may be sent in the termination message such as BYE message or the like. Softswitch A 101 sends (315) termination message to firewall A 106, which in turn sends (316) the termination message to Firewall B 107. Firewall B 107 sends (317) termination message towards softswitch B 102. The softswitch B 102 does not have any details regarding the session and hence softswitch B 102 sends (318) an update request to the central database 109. The central database 109 may send (319) a response for the update request to the softswitch B 102. The remote side 316 may use the time stamp information in the termination message to inform the charging module 108. Further, a message is sent (320) from Softswitch A 101 to the charging module 108 to stop the charging process as the session is released. Using the caller details from the central database 109, the softswitch B 102 sends termination message such as BYE to remote side 316. This termination message is sent first to firewall B 107 (321), which in turn sends (322) it to the remote side 316. The charging module 108 may then send (323) an acknowledgment message to softswitch A 101 to the stop charging message. The remote side 316 sends a response message (to the termination message) such as 200 OK to the softswitch B 102. This response message is sent to firewall B 107 (324) which in turn sends (325) it to softswitch B 102. The softswitch B 102 sends (326) the response message to firewall B 107, which in turn sends (327) it to firewall A 106 that further sends (328) the message to softswitch A 101. The central database 109 needs to be updated accordingly on the release of the session. An update request is sent (329) to the central database 109 by the softswitch B 102. The central database 109 updates the details on the session charging and sends (330) the update response message to the softswitch B 102. The call flows in the above embodiment indicate the call flows for only the relevant network elements and not end-to-end call flows; however it does not aim to limit the scope of the application in any manner. The various actions in method 300 may be performed in the order presented, in a different order or simultaneously. Further, in some embodiments, some actions listed in FIG. 3 may be omitted..

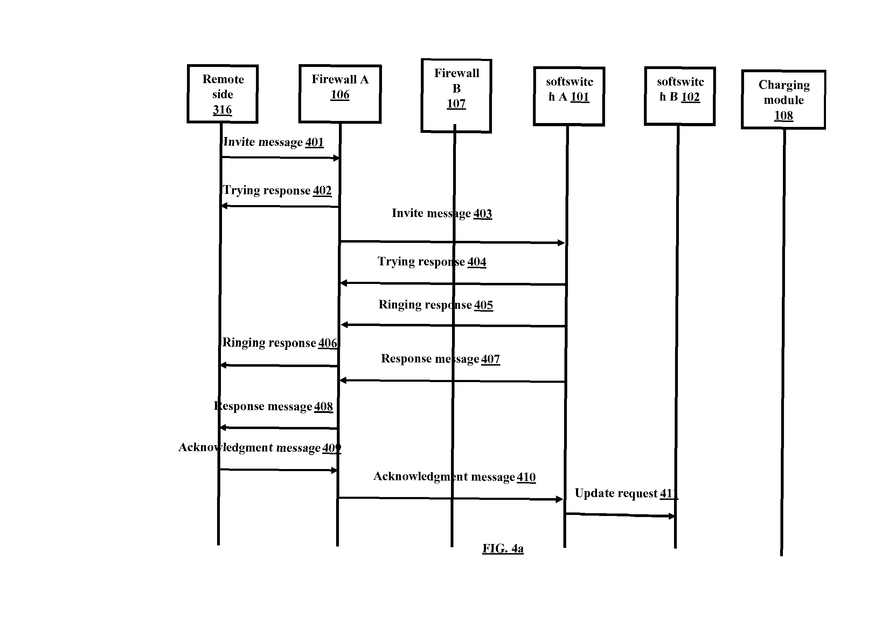

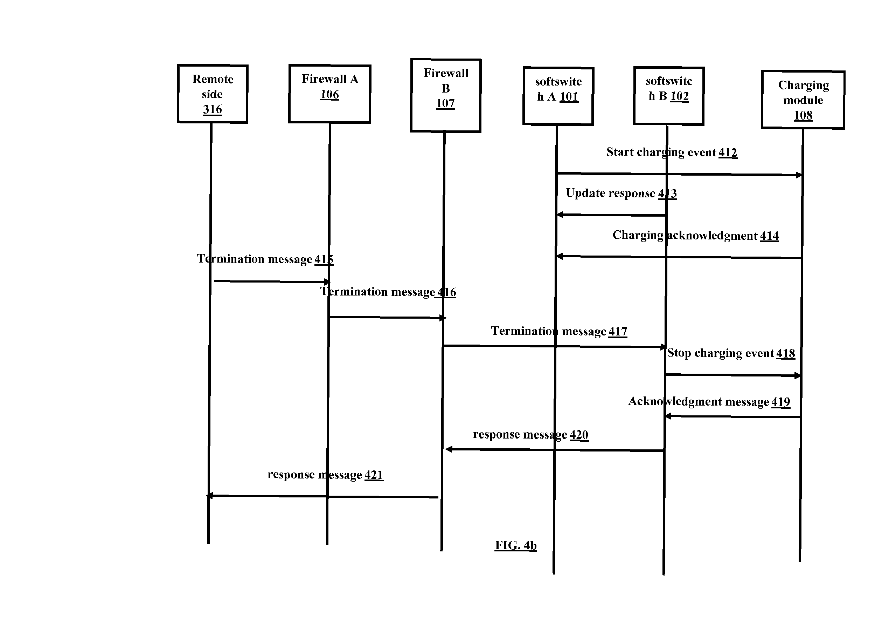

FIG. 4a and 4b are sequence diagrams depicting a scenario where SIP signaling alone fails and remote side triggers the release, without a central database provided, according to an embodiment as disclosed herein. Consider that a normal session is established and further the remote side 316 may trigger a release. For setting up a session, an invite message may be sent (401) to the firewall A 106. The message may be sent in the form of INVITE or the like. The firewall A 106 sends (402) an indication that the message is being conveyed and is being processed. Further, firewall A 106 sends (403) the invite message to softswitch A 101. Softswitch A 101 sends (404) a response that the message is being conveyed and is being processed. The response message may be a standard 1 00 Trying response or the like. A ringing response is sent (405) to firewall A 106 by Softswitch A 101 after the called user is alerted. The ringing response is then sent (406) to the remote side 316. The Softswitch A 101 may then send (407) a final response message to the firewall A 106 after the called user has answered the session request. The response message may be a 200 OK response message and the like. The response may be sent (408) to the remote side 316. The remote side 316 acknowledges (409) the firewall A 106. The acknowledgment message may then be sent (410) to softswitch A 101. Further, an update request (411) may be sent by Softswitch A 101 to Softswitch B 102 to update the stable session related details. The message may be sent as a DIAMETER protocol message or over SIP protocol or any other proprietary protocol interface. The charging interface is a generic charging interface and appropriate information may be required to be passed in case of online charging or offline charging. A message is sent (412) to the charging module 108 to start the charging for the session. The mate softswitch, i.e., Softswitch B 102 sends (413) an update response message to the softswitch A 101. The charging module 108 may then send (414) an acknowledgment to the softswitch A 101 indicating that charging process for the session is started. Subsequently, the signaling between the softswitch A 101 and remote side 316 fails. In addition, the signaling between softswitch A 101 and softswitch B 102 may also have failed (due to IP connectivity failure perhaps). The remote side may subsequently trigger the release of the session. The remote side 316 may send (415) a terminate message to firewall A 106. The time stamp information may be sent in the termination message in the Date header. After attempting to reach softswitch A 101, the firewall A 106 then sends the termination message to the softswitch B 102 (via Firewall B 107). Firewall A 106 sends (416) termination message to the firewall B 107. Firewall B 107 sends (417) the termination message to the softswitch B 102. The softswitch B 102 finds call related details using the information provided by softswitch A 101 earlier and starts the release procedure. The softswitch B 102 sends (418) message to the charging module 108 to stop charging the session. The time stamp information may be used to determine the session end time and the session duration. The charging module 108 sends (419) an acknowledgment message to softswitch B 102. The softswitch B 102 sends (420) the response message (to the termination message) to firewall B 107 which in turn sends (421) it to the remote side 316. The call flows in the above embodiment indicate the call flows for only the relevant network elements and not end-to-end call flows; however it does not aim to limit the scope of the application in any manner. The various actions in method 400 may be performed in the order presented, in a different order or simultaneously. Further, in some embodiments, some actions listed in FIG. 4 may be omitted.

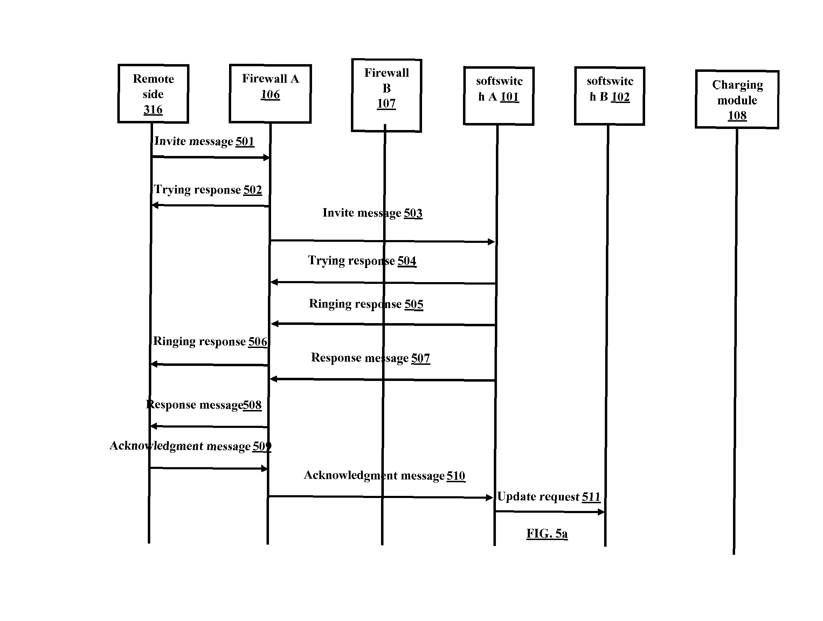

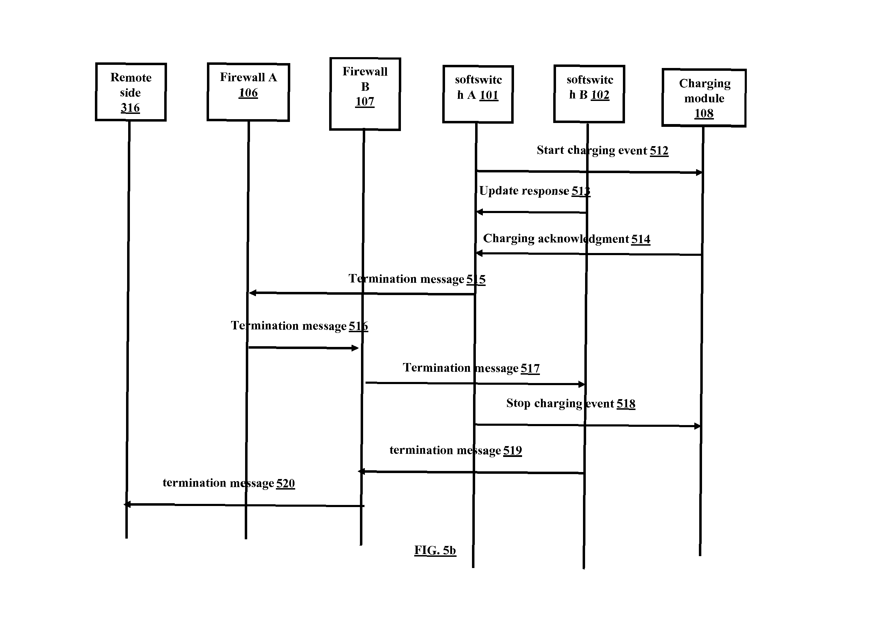

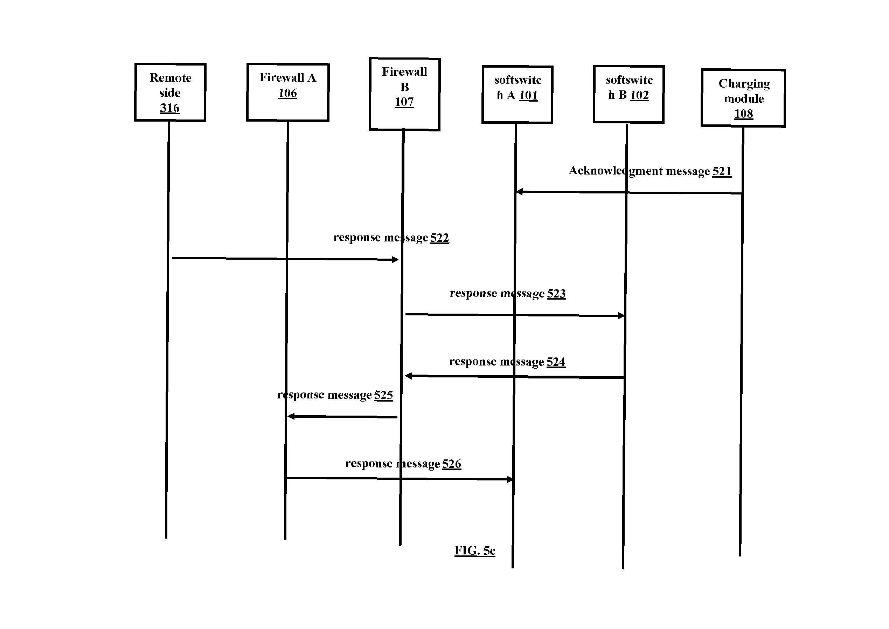

FIG. 5a, 5b and 5c are sequence diagrams depicting a scenario where SIP signaling alone fails and own side triggers the release, without a central database provided, according to an embodiment as disclosed herein. Consider that a normal session is established and subsequently Softswitch A 101 may trigger a release (before the release, SIP signaling has failed between Softswitch A 101 and remote side 316). The softswitch referred to in the following embodiment may be a MGC or an IMS S-CSCF. To set up the session an invite message may be sent (501) to the firewall A 106. The message may be sent in the form of INVITE or the like. The firewall A 106 sends (502) an indication that the message is being conveyed and is being processed. Further, the firewall A 106 sends (503) the invite message to the softswitch A 101. The softswitch A 101 sends (504) a response message that the message is being conveyed and is being processed. The response message may be a standard 100 Trying response or the like. A ringing response is sent (505) to firewall A 106 by softswitch A 101 after the called user is alerted. The ringing response is then sent (506) to the remote side 316. The Softswitch A 101 may then send (507) a final response message to the firewall A 106 after the called user has answered the session request. The response message may be a 200 OK response message and the like. The response may be sent (508) to the remote side 316. The remote side 316 acknowledges (509) the firewall A 106. The acknowledgment message may then be sent (510) to softswitch A 101. Further, an update request may be sent (511) by Softswitch A 101 to Softswitch B 102 to update the stable session related details. The message may be sent as a DIAMETER protocol message or over SIP protocol or any other proprietary protocol interface. The softswitch A 101 sends (512) a message to start the charging for the session to the charging module 108. Softswitch B 102 sends (513) an update response message to softswitch A 101. The charging module 108 acknowledges (514) softswitch A 101 that the charging is started. Subsequently, the SIP signaling between the softswitch A 101 and the remote side 316 fails. Some time after the failure, release is triggered by softswitch A 101 perhaps due to on-hook of the called subscriber. Softswitch A 101 sends (515) termination message to firewall A 106, which in turn sends (516) it to firewall B 107. Firewall B 107 further sends (517) the termination message to the softswitch B 102. The softswitch B 102 finds call related details from the information sent by softswitch A 101 earlier. The softswitch A 101 then sends (518) stop charging event message to the charging module 108 on release of the session. Softswitch B 102 may then send a termination message to the remote side 316. The termination message is sent (519) by Softswitch B 102 to Firewall B 107, which in turn sends (520) it to the remote side 316. The charging module 108 then sends (521) the acknowledgment message to stop charging event message to the softswitch A 101. The remote side 316 uses the time stamp information included in the termination message (520) to calculate the session release time. The remote side 316 sends (522) the response message (to the termination message) to firewall B 107 which in turn, sends (523) it to softswitch B 102. Softswitch B 102 further sends (524) the message to firewall B 107 which in turn sends (525) it to the firewall A 106. The firewall A 106 sends (526) the response message to the softswitch A 101 and the session is released. The call flows in the above embodiment indicate the call flows for only the relevant network elements and not end-to-end call flows; however it does not aim to limit the scope of the application in any manner. The various actions in method 500 may be performed in the order presented, in a different order or simultaneously. Further, in some embodiments, some actions listed in FIG. 5 may be omitted.

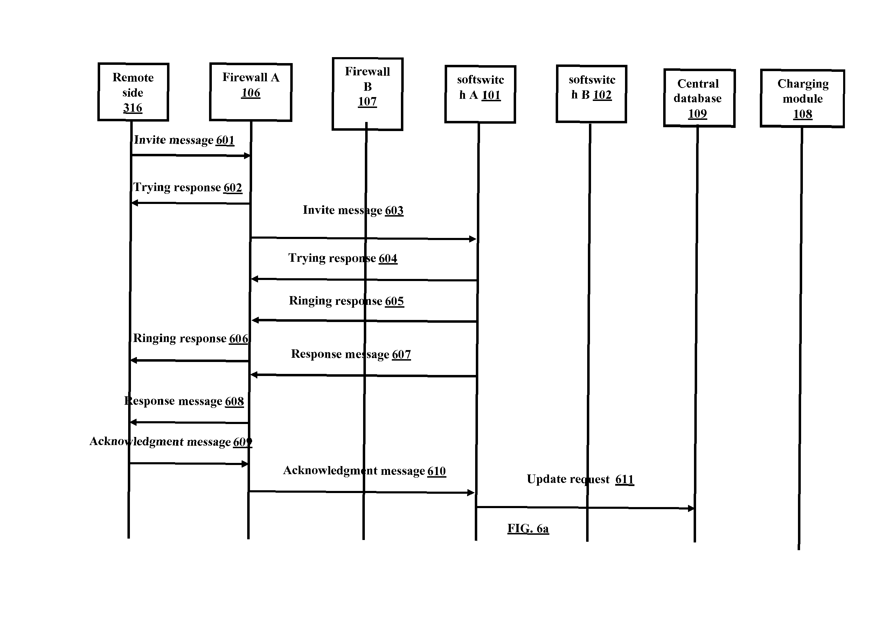

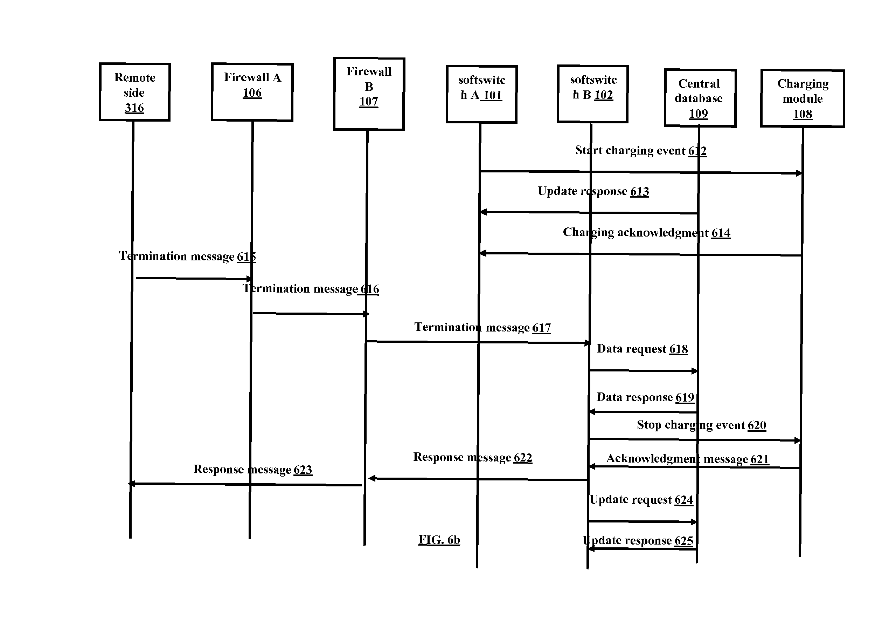

FIG 6a and 6b are sequence diagrams depicting a scenario wherein SIP signaling and MGCP fails and the remote side triggers the release, according to an embodiment as disclosed herein. Consider that a normal session is established and further the remote side 316 may trigger a release. The softswitch referred to in the following embodiment may be a MGC or an IMS S-CSCF. When session is setup, an invite message may be sent (601) to the firewall A 106. The message may be sent in the form of INVITE or the like. The firewall A 106 sends (602) an indication that the message is being conveyed and being processed. Further, firewall A 106 sends (603) the invite message to softswitch A 101. Softswitch A 101 sends (604) a response message that the message is being conveyed and being processed. The response message may be a standard 100 Trying response or the like. A ringing response is sent (605) to firewall A 106 by Softswitch A 101 once the called user is alerted. The ringing response is then sent (606) to the remote side 316. The Softswitch A 101 may then send (607) a final response message to the firewall A 106 once the called user answers the session request. The response message may be a 200 OK response message and the like. The response may be sent (608) to the remote side 316. The remote side 316 acknowledges (609) the firewall A 106. The acknowledgment message may then be sent (610) to softswitch A 101. Further, an update request may be sent to the central database 109. The message may be a diameter protocol message or sent over SIP protocol or any other proprietary protocol interface. In an embodiment, instead of updating the central database 109 the two softswitches 101, 102 may synchronize stable session data with each other. The softswitch A 101 sends (611) update request message to the central database 109. A message is sent (612) to the charging module 108 to start the charging for the session. The charging interface is a generic charging interface and appropriate information may be required to be passed in case of online charging or offline charging. Also, depending on the interface an acknowledgment may be sent from the charging module 108 towards the softswitch A 101. The central database 109 then sends (613) an update response message to the softswitch A 101. The charging module 108 may then send (614) an acknowledgment to the softswitch A 101 indicating that charging process for the session is started. Subsequently, during the active phase of the session, the signaling between the softswitch A 101 and remote side 316 fails, and as well the H.248/MGCP signaling has failed between the Softswitch 101 and the MG 104 (maybe due to MG 104 going down or some other reason). In addition, the signaling between softswitch A 101 and softswitch B 102 may also have failed (due to IP connectivity failure perhaps). The remote side 316 may subsequently trigger the release of the session. The remote side 316 may send (615) a terminate message to firewall A 106. The time stamp information may be sent in the termination message in the Date header. After attempting to reach softswitch A 101, the firewall A 106 then sends the termination message to softswitch B 102 via Firewall B 107. So firewall A 106 sends (616) termination message to the firewall B 107. Firewall B 107 sends (617) the termination message to the softswitch B 102. Since softswitch B 102 does not have session details it requests the information from the central database 109. So, softswitch B 102 sends (618) a data request to the central database 109. The central database 109 sends data response (619) to the softswitch B 102, and this message contains relevant details of the session. The softswitch B 102 sends (620) a message to the charging module 109 to stop the charging for the session. The message may also include details such as call details from the central database 109, time stamp information from the termination message to calculate session time and the time of release. The charging module 108 may then send (621) a message to the softswitch B 102 indicating that the charging is stopped. Softswitch B 102 then sends the response message (to the termination message) to the remote side 316. This response message is sent (622) by Softswitch B 102 to firewall B 107, which further sends (623) it to the remote side 316. Further, central database 109 may be updated accordingly. The softswitch B 102 may send (624) an update request message to the central database 109. The central database 109 may send (625) a response message to the softswitch B 102 after performing the necessary updates. The call flows in the above embodiment indicate the call flows for only the relevant network elements and not end-to-end call flows; however it does not aim to limit the scope of the application in any manner. The various actions in method 600 may be performed in the order presented, in a different order or simultaneously. Further, in some embodiments, some actions listed in FIG. 6 may be omitted.

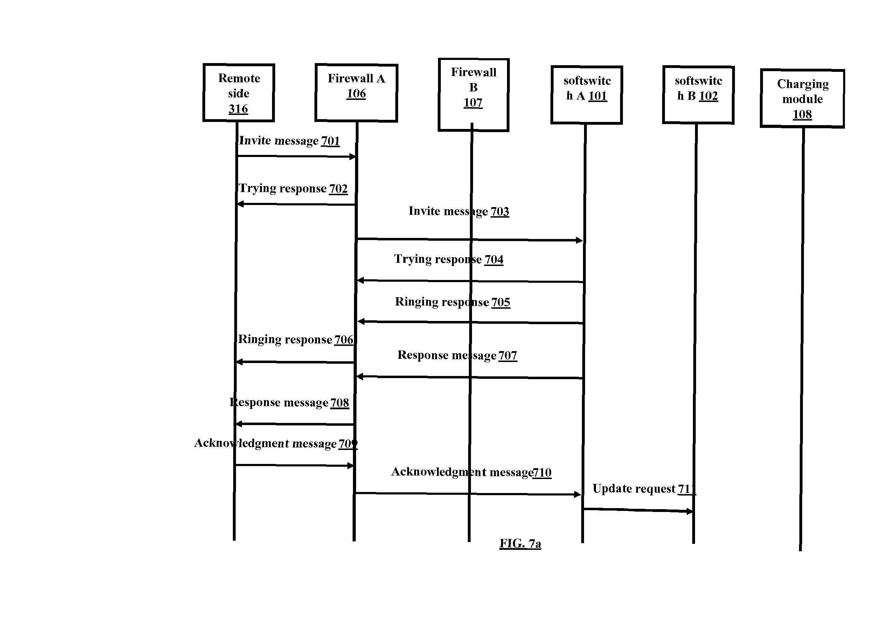

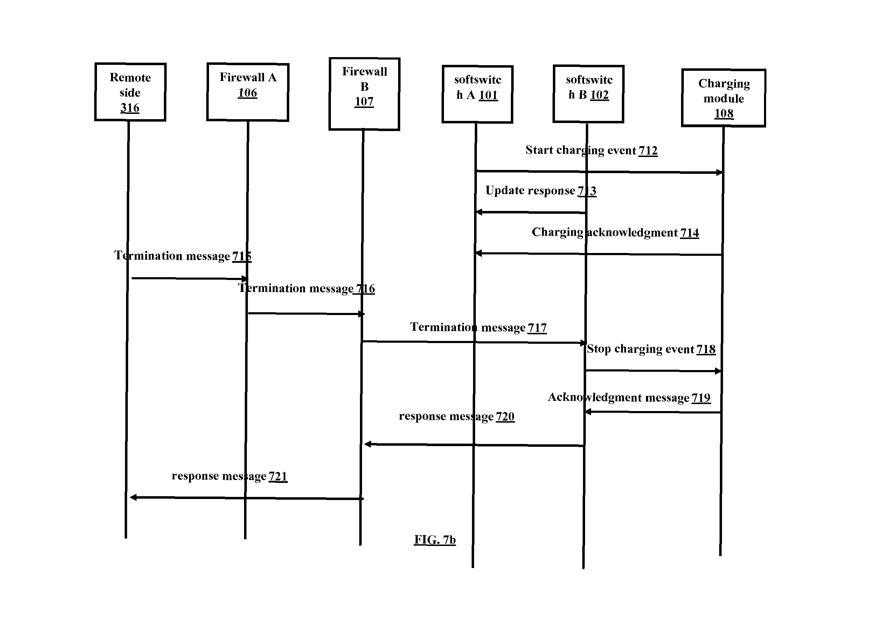

FIG 7a and 7b are sequence diagrams depicting a scenario wherein SIP signaling and MGCP fails and the remote side triggers the release, without a central database provided, according to an embodiment as disclosed herein. Consider that a normal session is established and further the remote side 316 may trigger a release. For setting up a session, an invite message may be sent (701) to the firewall A 106. The message may be sent in the form of INVITE or the like. The firewall A 106 sends (702) an indication that the message is being conveyed and is being processed. Further, firewall A 106 sends (703) the invite message to softswitch A 101. Softswitch A 101 sends (704) a response that the message is being conveyed and is being processed. The response message may be a standard 100 Trying response or the like. A ringing response is sent (705) to firewall A 106 by Softswitch A 101 after the called user is alerted. The ringing response is then sent (706) to the remote side 316. The Softswitch A 101 may then send (707) a final response message to the firewall A 106 after the called user has answered the session request. The response message may be a 200 OK response message and the like. The response may be sent (708) to the remote side 316. The remote side 316 acknowledges (709) the firewall A 106. The acknowledgment message may then be sent (710) to softswitch A 101. Further, an update request (711) may be sent by Softswitch A 101 to Softswitch B 102 to update the stable session related details. The message may be sent as a DIAMETER protocol message or over SIP protocol or any other proprietary protocol interface. The charging interface is a generic charging interface and appropriate information may be required to be passed in case of online charging or offline charging. A message is sent (712) to the charging module 108 to start the charging for the session. The mate softswitch, i.e., Softswitch B 102 sends (713) an update response message to the softswitch A 101. The charging module 108 may then send (714) an acknowledgment to the softswitch A 101 indicating that charging process is started. Subsequently, the signaling between the softswitch A 101 and remote side 316 fails, and as well the H.248/MGCP signaling has failed between the Softswitch 101 and the MG 104 (maybe due to MG 104 going down or some other reason), and in addition, the signaling between softswitch A 101 and softswitch B 102 may also have failed (due to IP connectivity failure perhaps). The remote side may subsequently trigger the release of the session. The remote side 316 may send (715) a terminate message to firewall A 106. The time stamp information may be sent in the termination message in the Date header. After attempting to reach softswitch A 101, the firewall A 106 sends the termination message to the softswitch B 102 (via Firewall B 107). Firewall A 106 sends (716) termination message to the firewall B 107. Firewall B 107 sends (717) the termination message to the softswitch B 102. The softswitch B 102 finds call related details using the information provided by softswitch A 101 earlier and starts the release procedure. The softswitch B 102 sends (718) message to the charging module 108 to stop charging the session. The time stamp information may be used to determine the session end time and the session duration. The charging module 108 sends (719) an acknowledgment message to softswitch B 102. The softswitch B 102 sends (720) the response message (to the termination message) to firewall B 107 which, in turn, sends (721) it to the remote side 316. The call flows in the above embodiment indicate the call flows for only the relevant network elements and not end-to-end call flows; however it does not aim to limit the scope of the application in any manner. The various actions in method 700 may be performed in the order presented, in a different order or simultaneously. Further, in some embodiments, some actions listed in FIG. 7 may be omitted.

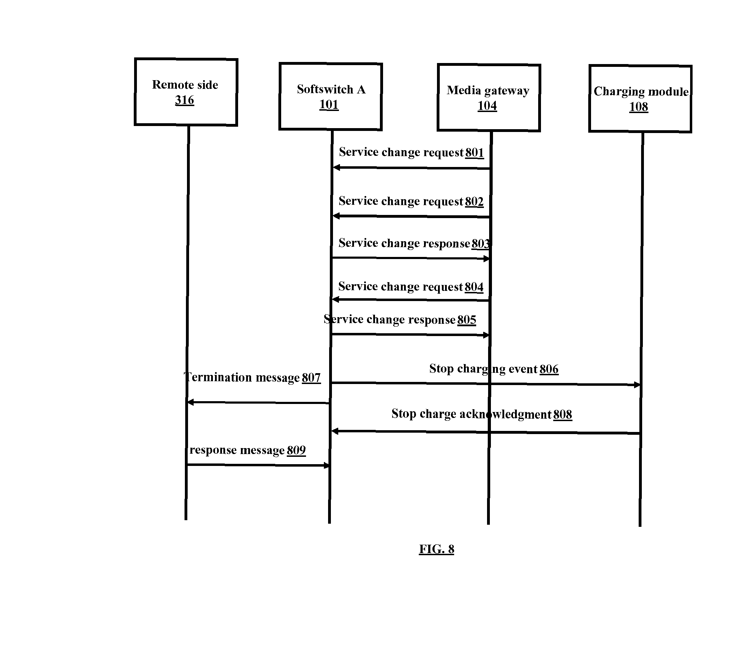

FIG. 8 is a sequence diagram depicting a scenario wherein SIP signaling and MGCP fails and the own side triggers the release, according to an embodiment as disclosed herein. Consider that the session is set up successfully and the H.248/MGCP fails temporarily, and as well the SIP Signaling with the remote side fails. The reasons may be due to failure of the IP network or the like. The MG 104 may send (801) a service change request to the softswitch to trigger the release of the session (example due to on-hook of the user). The softswitch may be softswitch A 101. The request message may include details such as a reason stating 'termination malfunctioning' or the like. As the connectivity is lost the service change message may not reach the softswitch A 101. The MG 104 may then store the time stamp value on termination level. Further, MG 104 re-sends the service change message with stored time stamp for that particular termination. After the connection is re-established. the MG 104 again sends the session change request with method as 'disconnected' at the root level. Such a service change request is sent (802) to the softswitch A 101 after connection is re-established. The softswitch A 101 sends (803) a response to the service change request to the MG 104. The MG 104 further sends (804) a service change request message to the softswitch A 101 for the sessions that were released during the time the H.248/MGCP was not OK. The service change request includes the same reason as sent in the service change message (as in step 801) earlier and stored time stamp at termination level. The softswitch A 101 then calculates the session end time using the time stamp information present in the service change request message. Further, the charging module 108 and the remote side 316 are informed of the release of the session in the termination message. The softswitch A 101 sends (805) a response message to the MG 104. The softswitch A 101 may then inform (806) the charging module 108 to stop charging for the session. The softswitch A 101 sends (807) termination message to the remote side 316 in the form of BYE containing the time stamp. Using the release time stamp information the charging modules 108 may be informed to act accordingly. The charging module 108 sends (808) an acknowledgment to the softswitch A 101 informing the softswitch A 101 that the charging is stopped. The remote side 316 may then send (809) the response message for the termination message to softswitch A 101. The response message may be of the form 200 OK and the like. The session then terminates. In an embodiment, the messages to/from softswitch A 101 shown in this figure would actually pass via the firewall A 106. The call flows in the above embodiment indicate the call flows for only the relevant network elements and not end-to-end call flows; however it does not aim to limit the scope of the application in any manner. The various actions in method 800 may be performed in the order presented, in a different order or simultaneously. Further, in some embodiments, some actions listed in FIG. 8 may be omitted.

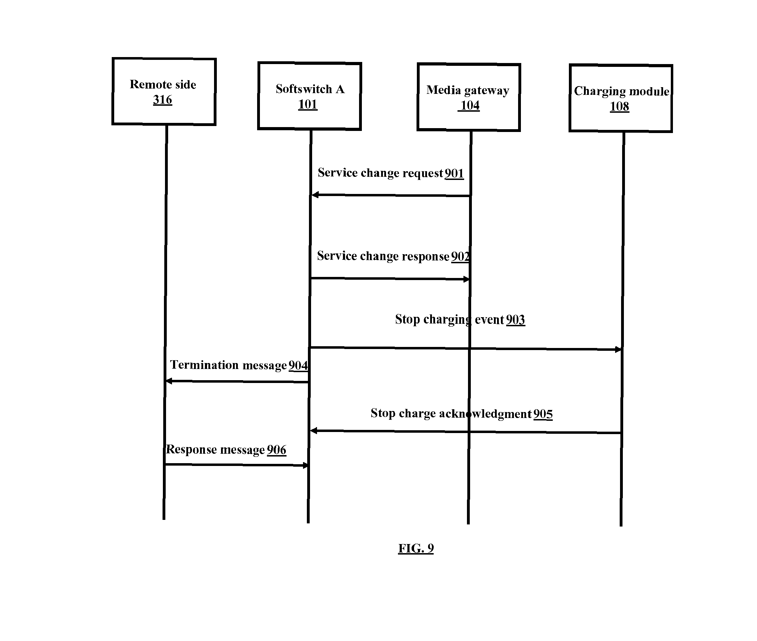

FIG 9 is a sequence diagram depicting a scenario wherein SIP signaling and MGCP fails and the own side triggers the release, according to an embodiment as disclosed herein. Consider that a session had been established successfully and the MG 104 restarts. This is more of a permanent failure and MG 104 may store failure time stamp in re-load safe memory; for example in the PROM. The information may be then transported to the softswitch A 101 when the MG 104 recovers back, and all the sessions handled by the MG 104 may be released subsequently. This ensures that none of the sessions are overcharged or undercharged. When the MG 104 restarts, MG 104 stores 'system down' time stamp in the reload safe memory. The MG 104 may then send (901) a session change request to the softswitch A 101 including method 'restart' when the connection is established again with the softswitch A 101. The MG 104 may also send 'system down' time stamp in the service change request message. Further, the softswitch A 101 sends (902) a response message to the MG 104. Using the received time stamp information in the session change request message the softswitch 101 calculates the session end time. Also, release may be triggered for all the busy terminations linked to the restarting MG 104 and charging module 108 may be informed accordingly by the softswitch 101. The sequence of message such as stop charging event and termination may be sent for all active sessions. The softswitch A 101 sends (903) stop charging event request to the charging module 108. The softswitch A 101 may also send (904) termination message to the remote side 316 along with the time stamp information. Further, an acknowledgment may be sent (905) by the charging module 108 to the softswitch A 101. A response message may be sent (906) by the remote side 316 to softswitch 101 (as a response for the termination message) such as 200 OK message. The session then terminates. In an embodiment, the messages to/from softswitch A 101 shown in this figure would actually pass via the firewall A 106. The call flows in the above embodiment indicate the call flows for only the relevant network elements and not end-to-end call flows; however it does not aim to limit the scope of the application in any manner. The various actions in method 900 may be performed in the order presented, in a different order or simultaneously. Further, in some embodiments, some actions listed in FIG. 9 may be omitted.

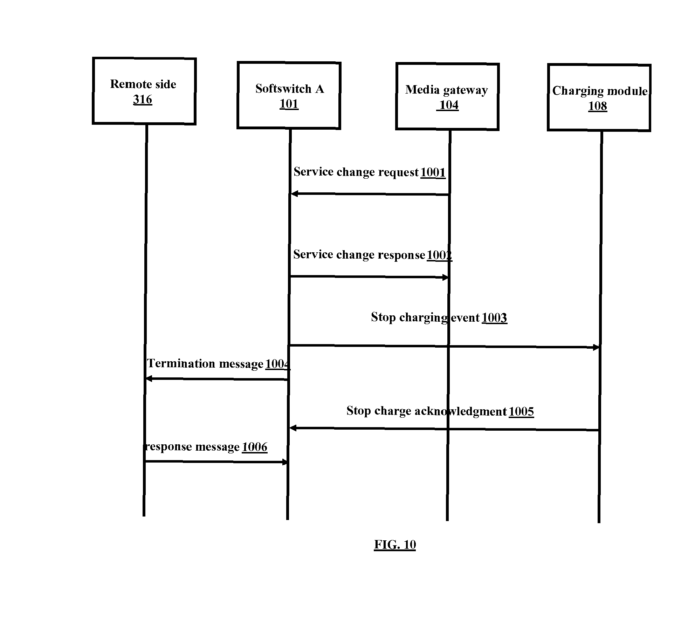

FIG. 10 is a flow chart depicting a scenario where the RTP alone fails and MG triggers the release, according to an embodiment as disclosed herein. In case of failure of the RTP, when H.248/MGCP signaling is still active between the MG and the softswitch, the MG 104, 105 may initiate release of the session. The release may be sent in the service change message, and it may contain the time stamp information of the failure. Consider the session has been set up successfully. There may arise some network problem such as Internet Protocol (IP) network failure, due to which the RTP packets may not be exchanged. This may lead to expiry in the RTP inactivity timer at the MG 104, 105. The MG 104 may send (1001) a service change request to the concerned softswitch 101, 102. In an example, consider softswitch A 101. The service change request may contain the reason as 'termination malfunctioning' with used RTP inactivity timer value. The softswitch A 101 on receiving the request employs the information in the request to re-calculate the stop event time using the RTP inactivity timer value. Further, the softswitch A 101 may send a response message (1002) to the MG 104. The softswitch A 101 may then send (1003) a message to the charging module 108 in order to stop the charging process for the session. Further, softswitch A 101 also sends (1004) a termination message to the remote side 316. The termination message may contain the actual session release time stamp. The charging module 108 then sends (1005) an acknowledgment message to the softswitch A 101 indicating that the charging is stopped. The remote side 316 may send (1006) the response message (to the termination message) to the softswitch A 101. The termination message may be of the form such as BYE or the like, and the response message (to the termination message) may be of the form such as 200 OK or the like. In an embodiment, the messages to/from softswitch A 101 shown in this figure would actually pass via the firewall A 106. The call flows in the above embodiment indicate the call flows for only the relevant network elements and not end-to-end call flows; however it does not aim to limit the scope of the application in any manner. The various actions in method 1000 may be performed in the order presented, in a different order or simultaneously. Further, in some embodiments, some actions listed in FIG. 10 may be omitted.

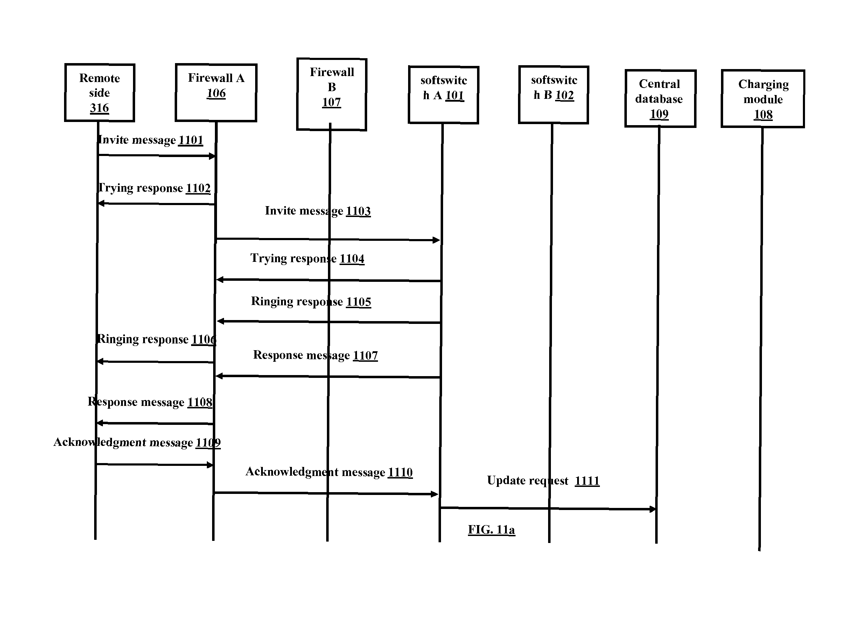

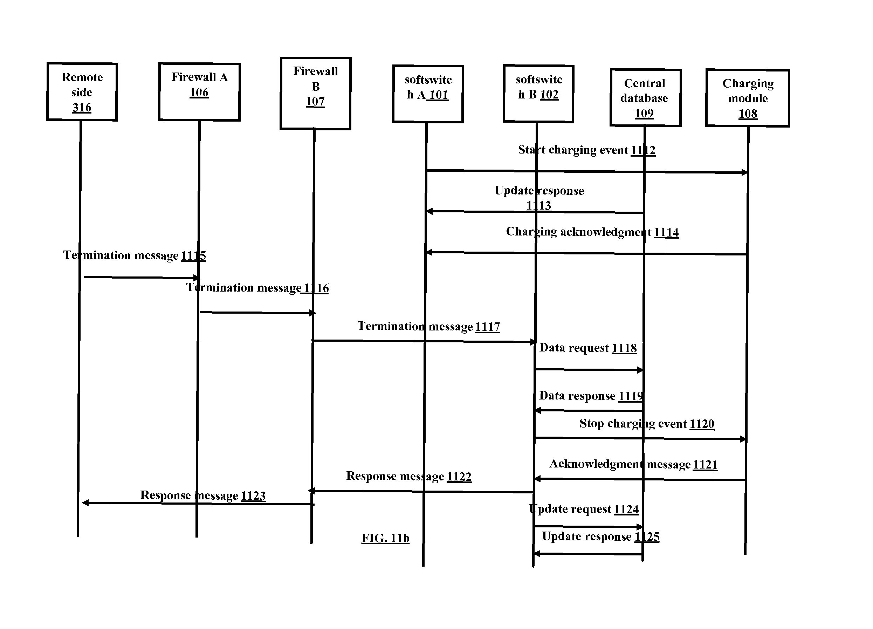

FIG. 11 is a sequence diagram depicting a scenario where one of the softswitches goes down and the release is triggered by the remote side, according to an embodiment as disclosed herein. Consider that a normal session is established and further the remote side 316 may trigger a release. The softswitch referred to in the following embodiment may be a MGC or an IMS S-CSCF. When session is setup, an invite message may be sent (1101) to the firewall A 106. The message may be sent in the form of INVITE or the like. The firewall A 106 sends (1102) an indication that the message is being conveyed and being processed. Further, firewall A 106 sends (1103) the invite message to softswitch A 101. Softswitch A 101 sends (1104) a response message that the message is being conveyed and being processed. The response message may be a standard 100 Trying response or the like. A ringing response is sent (1105) to firewall A 106 by Softswitch A 101 once the called user is alerted. The ringing response is then sent (1106) to the remote side 316. The Softswitch A 101 may then send (1107) a final response message to the firewall A 106 once the called user answers the session request. The response message may be a 200 OK response message and the like. The response may be sent (1108) to the remote side 316. The remote side 316 acknowledges (1109) the firewall A 106. The acknowledgment message may then be sent (1110) to softswitch A 101. Further, an update request may be sent to the central database 109. The message may be a diameter protocol message or sent over SIP protocol or any other proprietary protocol interface. In an embodiment, instead of updating the central database 109 the two softswitches 101, 102 may synchronize stable session data with each other. The softswitch A 101 sends (1111) update request message to the central database 109. A message is sent (1112) to the charging module 108 to start the charging for the session. The charging interface is a generic charging interface and appropriate information may be required to be passed in case of online charging or offline charging. Also, depending on the interface an acknowledgment may be sent from the charging module 108 towards the softswitch A 101. The central database 109 then sends (1113) an update response message to the softswitch A 101. The charging module 108 may then send (1114) an acknowledgment to the softswitch A 101 indicating that charging process for the session is started. Subsequently, during the active phase of the session, the signaling between the softswitch A 101 and remote side 316 fails, due to the Softswitch A 101 going down. The remote side 316 may subsequently trigger the release of the session. The remote side 316 may send (1115) a terminate message to firewall A 106. The time stamp information may be sent in the termination message in the Date header. After attempting to reach softswitch A 101, the firewall A 106 sends the termination message to softswitch B 102 via Firewall B 107. So firewall A 106 sends (1116) termination message to the firewall B 107. Firewall B 107 sends (1117) the termination message to the softswitch B 102. Since softswitch B 102 does not have session details it requests the information from the central database 109. So, softswitch B 102 sends (1118) a data request to the central database 109. The central database 109 sends data response (1119) to the softswitch B 102. The softswitch B 102 sends (1120) a message to the charging module 109 to stop the charging for the session. The message may also include details such as call details from the central database 109, time stamp information from the termination message to calculate session time and the time of release. The charging module 108 may then send (1121) a message to the softswitch B 102 indicating that the charging is stopped. Softswitch B 102 then sends the response message (to the termination message) to the remote side 316. The response message is sent (1122) by Softswitch B 102 to firewall B 107, which, in turn, sends (1123) the response message to the remote side 316. Further, central database 109 may be updated accordingly. The softswitch B 102 may send (1124) an update request message to the central database 109. The central database 109 may send (1125) a response message to the softswitch B 102 after performing the necessary updates. The call flows in the above embodiment indicate the call flows for only the relevant network elements and not end-to-end call flows; however it does not aim to limit the scope of the application in any manner. The various actions in method 1100 may be performed in the order presented, in a different order or simultaneously. Further, in some embodiments, some actions listed in FIG. 11 may be omitted.

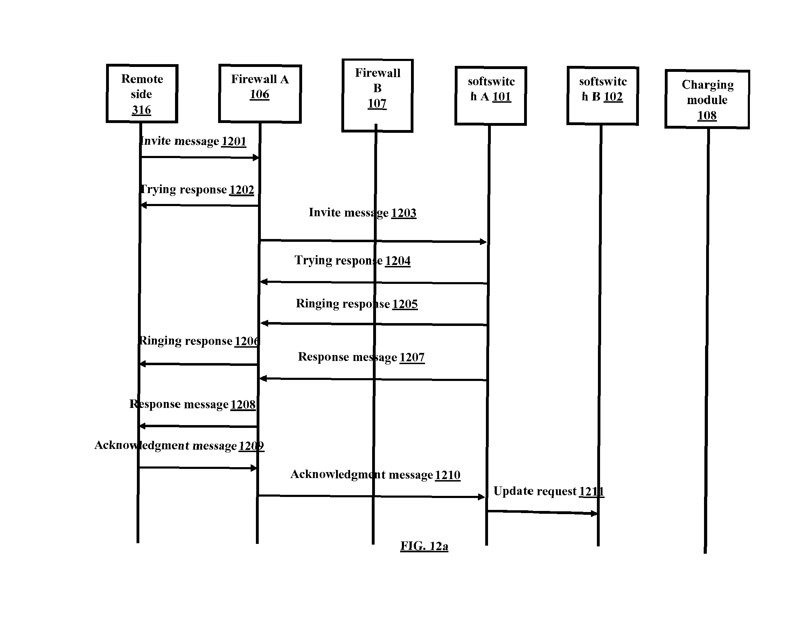

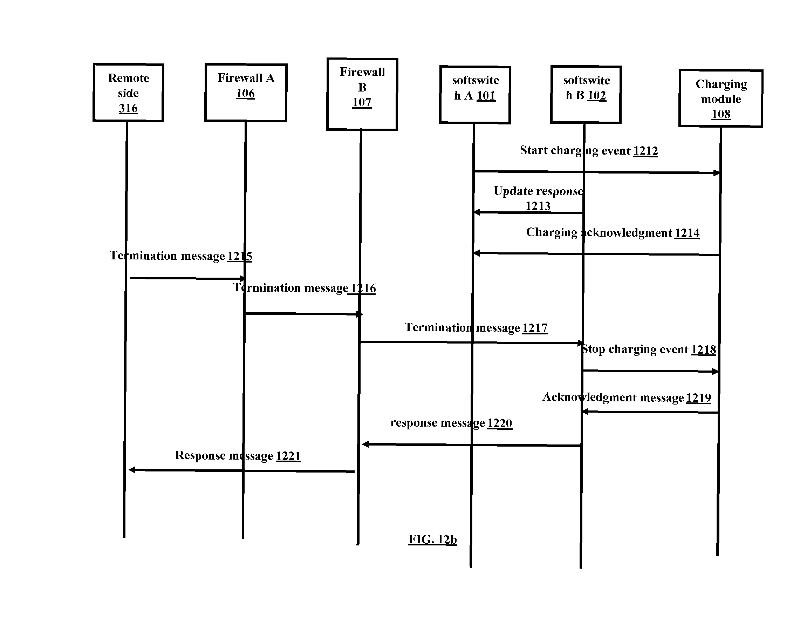

FIG. 12 is a sequence diagram depicting a scenario where one of the softswitches goes down and the release is triggered by the remote side without a central database provided, according to an embodiment as disclosed herein. Consider that a normal session is established and further the remote side 316 may trigger a release. For setting up a session, an invite message may be sent (1201) to the firewall A 106. The message may be sent in the form of INVITE or the like. The firewall A 106 sends (1202) an indication that the message is being conveyed and is being processed. Further, firewall A 106 sends (1203) the invite message to softswitch A 101. Softswitch A 101 sends (1204) a response that the message is being conveyed and is being processed. The response message may be a standard 100 Trying response or the like. A ringing response is sent (1205) to firewall A 106 by Softswitch A 101 after the called user is alerted. The ringing response is then sent (1206) to the remote side 316. The Softswitch A 101 may then send (1207) a final response message to the firewall A 106 after the called user has answered the session request. The response message may be a 200 OK response message and the like. The response may be sent (1208) to the remote side 316. The remote side 316 acknowledges (1209) the firewall A 106. The acknowledgment message may then be sent (1210) to softswitch A 101. Further, an update request (1211) may be sent by Softswitch A 101 to Softswitch B 102 to update the stable session related details. The message may be sent as a DIAMETER protocol message or over SIP protocol or any other proprietary protocol interface. The charging interface is a generic charging interface and appropriate information may be required to be passed in case of online charging or offline charging. A message is sent (1212) to the charging module 108 to start the charging for the session. The mate softswitch, i.e., Softswitch B 102 sends (1213) an update response message to the softswitch A 101. The charging module 108 may then send (1214) an acknowledgment to the softswitch A 101 indicating that charging process is started. Subsequently, the signaling between the softswitch A 101 and remote side 316 fails due to the softswitch A 101 going down. The remote side may subsequently trigger the release of the session. The remote side 316 may send (1215) a terminate message to firewall A 106. The time stamp information may be sent in the termination message in the Date header. After attempting to reach softswitch A 101, the firewall A 106 switches release request to the softswitch B 102 (via Firewall B 107). Firewall A 106 sends (1216) termination message to the firewall B 107. Firewall B 107 sends (1217) the termination message to the softswitch B 102. The softswitch B 102 finds call related details using the information provided by softswitch A 101 earlier and starts the release procedure. The softswitch B 102 sends (1218) message to the charging module 108 to stop charging the session. The time stamp information may be used by the charging module 108 to determine the session end time and the session duration. The charging module 108 sends (1219) an acknowledgment message to softswitch B 102. The softswitch B 102 sends the response message (to the termination message) to the remote side 316. The response message is sent (1220) by the softswitch B 102 to firewall B 107, which, in turn, sends (1221) it to the remote side 316. The call flows in the above embodiment indicate the call flows for only the relevant network elements and not end-to-end call flows; however it does not aim to limit the scope of the application in any manner. The various actions in method 1200 may be performed in the order presented, in a different order or simultaneously. Further, in some embodiments, some actions listed in FIG. 12 may be omitted.

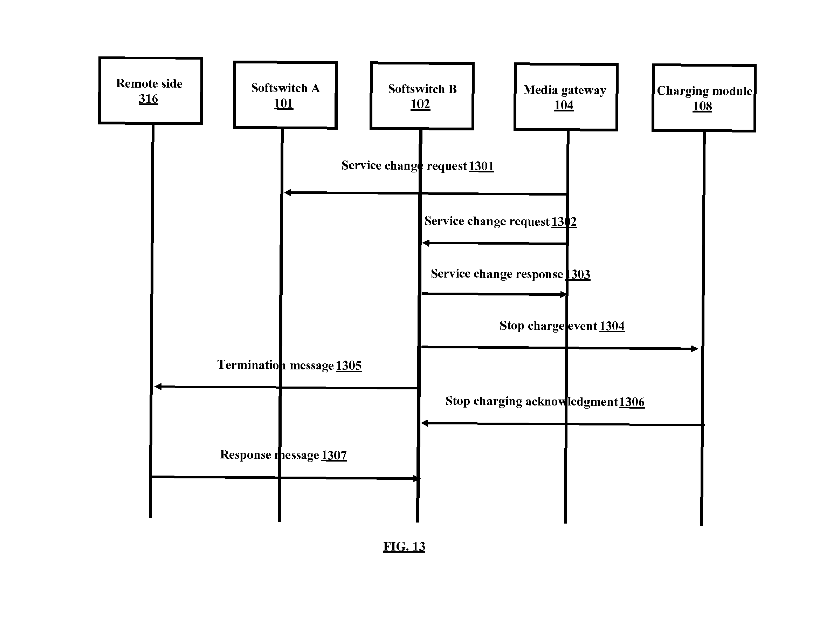

FIG. 13 is a sequence diagram depicting a scenario where one of the softswitches goes down and the release is triggered by the own side, according to an embodiment as disclosed herein. Consider that a session has been set up successfully and H.248 signal is lost temporarily due to the failure of the softswitch. During this time, a session release request may be sent. The media gateway 104 sends (1301) a service change request to the softswitch A 101. The media gateway 104 sends the service change reason as 'termination malfunctioning'. But as the connectivity is lost already the request does not reach the softswitch A 101. The media gateway 104 stores the time stamp value on termination level and media gateway A 104 re-sends the service change message with the stored time stamp value for that termination after the connection is re-established (actually established with Softswitch B 102 which is the geographically redundant pair of Softswitch A 101). The media gateway 104 sends service change with method as Disconnected at ROOT level. The service change request is sent (1302) to softswitch B 102. The media gateway 104 sends service change with the same reason (as in step 1301) and the stored time stamp. The softswitch B 102 calculates the session end time using the received time stamp in the service change message. Further, the softswitch B 102 may obtain the session details either from a central database or via an update message from softswitch A 101. The softswitch B 102 sends (1303) a service change response to the media gateway 104. Softswitch B 102 informs the charging function 108 accordingly based on the time stamp and the session details. Softswitch B 102 sends (1304) a message to charging module 108 to stop charging for the session (with the release timestamp and other relevant details described above). The softswitch B 102 then sends (1305) the release time stamp in the termination message to the remote side 316. The termination message may be a BYE message or the like. The remote side 316 uses the release time stamp in the message to inform the charging module 108 accordingly. The charging module 108 may send (1306) an acknowledgment message for the stop charging event to the softswitch B 102. Further, the remote side 316 sends (1307) a response message to the termination message to the softswitch B 102. The response message may be 200 OK response or the like. In an embodiment, the messages to/from softswitch B 102 shown in this figure would actually pass via the firewall B 107. The call flows in the above embodiment indicate the call flows for only the relevant network elements and not end-to-end call flows; however it does not aim to limit the scope of the application in any manner. The various actions in method 1300 may be performed in the order presented, in a different order or simultaneously. Further, in some embodiments, some actions listed in FIG. 13 may be omitted.

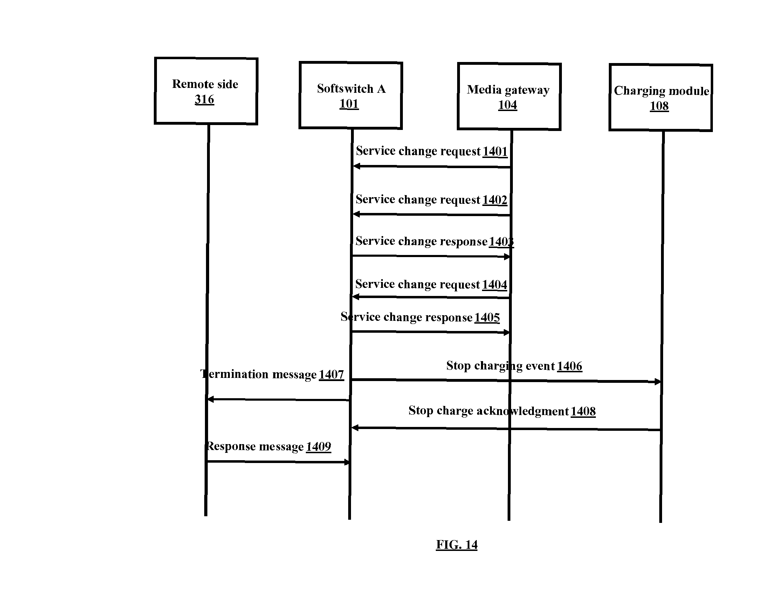

FIG. 14 is a sequence diagram depicting a scenario where there is temporary failure of H.248/MGCP, according to an embodiment as disclosed herein. Consider that the session is set up successfully and the H.248/MGCP fails temporarily. The reasons may be due to failure of the IP network or the like. The MG 104 may send (1401) a service change request to the softswitch to trigger the release of the session (example due to on-hook of the user). The softswitch may be softswitch A 101. The request message may include details such as a reason stating 'termination malfunctioning' or the like. As the connectivity is lost the service change message may not reach the softswitch A 101. The MG 104 may then store the time stamp value on termination level. Further, MG 104 re-sends the service change message with stored time stamp for that particular termination. After the connection is re-established the MG 104 again sends the session change request with method as 'disconnected' at the root level. Such a service change request is sent (1402) to the softswitch A 101 after connection is re-established. The softswitch A 101 sends (1403) a response to the service change request to the MG 104. The MG 104 further sends (1404) a service change request message to the softswitch A 101. The service change request includes the same reason and stored time stamp at termination level as sent in the message earlier (as in Step 1401). The softswitch A 101 then calculates the session end time using the time stamp information present in the service change request message. Further, the charging module 108 and the remote side 316 are informed of the release of the session in the termination message. The softswitch A 101 sends (1405) a response message to the MG 104. The softswitch A 101 may then inform (1406) the charging module 108 to stop charging for the session. The softswitch A 101 sends (1407) termination message to the remote side 316 in the form of BYE containing the time stamp. Using the release time stamp information the charging module 108 may be informed to act accordingly. The charging module 108 sends (1408) an acknowledgment to the softswitch A 101 informing the softswitch A 101 that the charging is stopped. The remote side 316 may then send (1409) the response message for the termination message to softswitch A 101. The response message may be of the form 200 OK and the like. The session then terminates. In an embodiment, the messages to/from softswitch A 101 shown in this figure would actually pass via the firewall A 106. The call flows in the above embodiment indicate the call flows for only the relevant network elements and not end-to-end call flows; however it does not aim to limit the scope of the application in any manner. The various actions in method 1400 may be performed in the order presented, in a different order or simultaneously. Further, in some embodiments, some actions listed in FIG. 14 may be omitted.

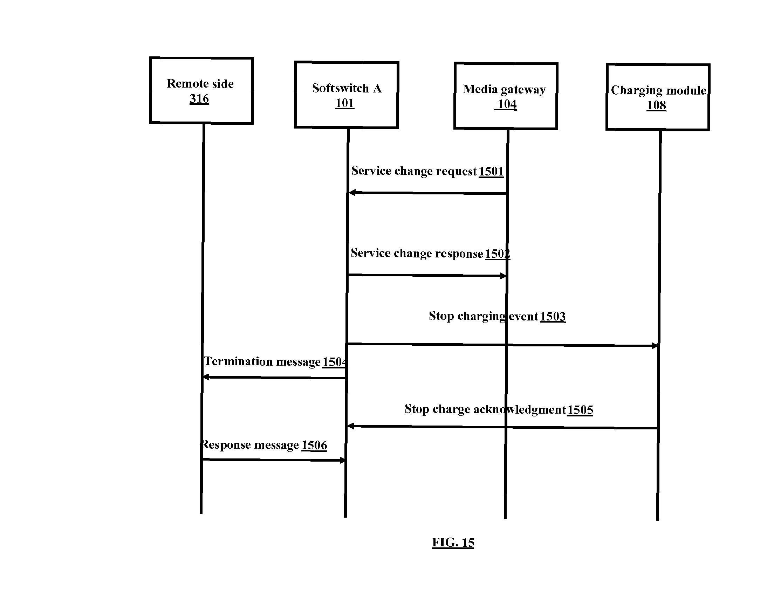

FIG. 15 is a sequence diagram depicting a scenario where the gateway goes down resulting in permanent failure, according to an embodiment as disclosed herein. Consider that a session had been established successfully and the MG 104 restarts. This is more of a permanent failure and MG 104 may store failure time stamp in re-load safe memory; for example in the PROM. The information may be then transported to the softswitch A 101 when the MG 104 recovers back, and all the sessions handled by the MG 104 may be released subsequently. This ensures that none of the sessions are overcharged or undercharged. When the MG 104 restarts, MG 104 stores 'system down' time stamp in the reload safe memory. The MG 104 may then send (1501) a session change request to the softswitch A 101 including method 'restart' when the connection is established again with softswitch A 101. The MG 104 may also send 'system down' time stamp in the service change request message. Further, the softswitch A 101 sends (1502) a response message to the MG 104. Using the received time stamp information in the session change request message the softswitch 101 calculates the session end time. Also, release may be triggered for all the busy terminations linked to the restarting MG 104 and charging module 108 may be informed accordingly by the softswitch A 101. The sequence of message such as stop charging event and termination may be sent for all active sessions. The softswitch A 101 sends (1503) stop charging event request to the charging module 108. The softswitch A 101 may also send (1504) termination message to the remote side 316 along with the time stamp information. Further, an acknowledgment may be sent (1505) by the charging module 108 to the softswitch A 101. A response message may be sent (1506) by the remote side 316 to softswitch 101 (as a response for the termination message) such as 200 OK message. The session then terminates. In an embodiment, the messages to/from softswitch A 101 shown in this figure would actually pass via the firewall A 106. The call flows in the above embodiment indicate the call flows for only the relevant network elements and not end-to-end call flows; however it does not aim to limit the scope of the application in any manner. The various actions in method 1500 may be performed in the order presented, in a different order or simultaneously. Further, in some embodiments, some actions listed in FIG. 15 may be omitted.

In an embodiment, when a mate softswitch 101, 102 successfully releases the session, for example in case of SIP signaling towards the remote side 316 fails, the mate softswitch 101, 102 may inform the central database 109 of the session release. The central database 109 may then inform the softswitch 101, 102 of the session being released. In case, if the central database 109 was not used, the mate softswitch 101, 102 may subsequently inform the softswitch 101, 102 directly of the session release.

In another embodiment, if the softswitch 101, 102 becomes aware that the instant of actual release occurred locally before the termination message (i.e., BYE) was received from the remote side 316, the softswitch 101, 102 may include the release time stamp in the response message (to the termination message) such as 200 OK. This would then be used by the remote side 316 to inform the charging module 108 accordingly. In an example, cases when the MG 101, 105 sending a service change message towards the softswitch 101, 102 with the release time stamp, but the termination message was received from the remote side 316 before the softswitch 101, 102 can send a termination message. In another instance, an IP network failure may occur following which, a termination message was received from the remote side 316, before the softswitch 101, 102 could send out a termination message (BYE message).

In an embodiment, in case of complete IP network failure including the link connecting the mate softswitch 101, 102 after trying to retransmit the termination message several times, upon failure, the softswitch 101, 102 shall store a special indication locally, along with the release time stamp. If a termination message is received subsequently from the remote side, this special indication is retrieved by the softswitch 101, 102 (depending on which softswitch receives the release from the remote side, even though the session related information is not actively maintained any longer) and the release time stamp may be transported in the 200 OK response message. This is a special handling, instead of the usual 4XX response to the BYE since the session is not active any longer in the softswitch 101, 102.

In an embodiment, if the softswitch 101, 102 operates as an IBCF acting as back-to-back user agent (B2BUA) the application discussed here covers different failure scenarios such as SIP signaling failure, BG failure and so on. Different failure scenarios may be handled without or minimum amount of undercharging or overcharging.

In an embodiment, for example, if SIP signaling as well as H.248/MGCP fails towards Softswitch A, and own side triggers the release, the BYE message from the remote side 316 may be received by Softswitch B 102 (triggered by subsequent on-hook of the remote side user) before the service change is received by Softswitch A 101 informing the release. In such cases, the most accurate timestamp (i.e., the entity reporting the earliest time of release) shall be used by the charging functions. Further, if such cases lead to multiple reporting of stop charging event towards the charging function 108, the charging function shall accept them, and again use the earliest reported timestamp corresponding to the session release. Several such conflicting cases can arise, for example, SIP signaling towards remote side fails, and own gateway goes down, etc. In all such cases, the principles of using the earliest timestamp of session release and handling duplicate reporting shall be followed. Any error scenarios and responses that may arise in such situations shall also be implemented in a way that the philosophy of undercharging/overcharging is minimized, and the exact implementation of handling such glare cases may be left to the network.

In an embodiment, the storing of the timestamp by the media gateway under both temporary failure (H.248/MGCP failure) or permanent failure (media gateway going down), and then informing the softswitch 101 subsequently may be used even in the absence of geographical redundancy.

In an embodiment, the charging module 108 may also employ geographical redundancy (for example, as active-standby) and several new scenarios would arise due to failures associated with the charging module, for example, the active charging module in the geographically redundant pairs go down, the connectivity between the softswitches 101, 102 and the active charging module is lost, etc.

In an embodiment, the central database 109 may also employ geographical redundancy (for example, as active-standby) and several new scenarios would arise due to failures associated with the central database, for example, the active central database in the geographically redundant pairs go down, the connectivity between the softswitches 101, 102 and the active central database is lost, etc.

In an embodiment, some of the advantages of the application from network operator perspective are that the method ensures that the operator's revenue is not lost and at the same time the user is also satisfied. Further, the implementation of the method is very easy. In addition, the method adds more revenue to the operator as the network reliability and robustness increases, particularly from the end users perspective. In addition, from the end users perspective, the end users are convinced that they will not be overcharged due to network failures or other scenarios that lie outside the control of the end user. The method would make a significant difference particularly for highly charged calls, e.g., international calls, high bandwidth multimedia sessions with strict QoS guarantees. This, in turn, would considerably increase end users satisfaction.

The embodiments disclosed herein can be implemented through at least one software program running on at least one hardware device and performing network management functions to control the network elements. The network elements shown in Fig. 1 includes blocks which can be at least one of a hardware device, or a combination of hardware device and software module.

The embodiment disclosed herein specifies a system for preventing overcharging or undercharging in communication networks. The mechanism prevents overcharging or undercharging for session by providing a system thereof. Therefore, it is understood that the scope of the protection is extended to such a program and in addition to a computer readable means having a message therein, such computer readable storage means contain program code means for implementation of one or more steps_of the method, when the program runs on a server or mobile device or any suitable programmable device. The hardware device can be any kind of device which can be programmed including e.g. any kind of computer like a server or a personal computer, or the like, or any combination thereof, e.g. one processor and two FPGA's. Thus, the means are at least one hardware means and/or at least one software means. The method embodiments described herein could be implemented in pure hardware or partly in hardware and partly in software. The device may also include only software means. Alternatively, the invention may be implemented on different hardware devices, e.g. using a plurality of CPUs.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the claims as described herein.

## Claims

1. A network controller for handling charging in a communication network, said controller adapted for:
● receiving an indication message from a media gateway (104, 105) on said media gateway (104, 105) informing a session release during one or more failures in the communication network;
● fetching information from said message on time of release; and
● sending an indication to a charging module (108) to stop charging for an on going session during which said release occurred.

2. The network controller as in claim 1, wherein said network controller is adapted for receiving said indication message in the form of a service change request.

3. The network controller as in claim 1, wherein said network controller is further adapted to update said release information to a database (109).

4. The network controller as in claim 1, wherein said network controller is further adapted to store session set up information in a database.

5. The network controller as in claim 10, wherein said network controller is further adapted to synchronize said stored information on said database with a mate media gateway controller.

6. A method for preventing undercharging and overcharging in a communication network, said method comprising :
a media gateway (104, 105) sending an indication to a network controller on release of a session under communication network/node failure scenarios;
said network controller extracting time related information from said message received from said media gateway (104, 105);
said network controller sending an indication to a charging module of said release; and
said network controller informing the time of said session release to the remote side in a session initiation protocol BYE message.

7. The method as in claim 6, wherein said network controller extracts time related information of said release of a session from the session initiation protocol BYE message in case the session release was triggered from the remote side.

8. The method as in claim 6, wherein said media gateway (104, 105) sends an indication in the form of a service change request.

9. The method as in claim 6, wherein said time related information indicates the time of release of said session.

10. The method as in claim 6, wherein said indication sent by said network controller is to stop charging for said session.

11. The method as in claim 6, wherein said network controller converts said time related information into a suitable GMT.

12. Software program having processing means for running the method according to any of claims 6 to 11.
